# DEMANDE DE BREVET EUROPEEN

(11) **EP 3 779 961 A1**
(43) Date de publication de la demande: **17.02.2021**
(21) Numéro de dépôt: 20189027.4
(22) Date de dépôt: 31.07.2020
(51) Int. Cl.: G10K 11/172, B32B 3/12, F02C 7/045, F02K 1/82, B64C 1/40, B32B 3/08, B32B 3/26

(54) **ELÉMENT ACOUSTIQUE À DOUBLE ENCEINTE ET ENCOMBREMENT RÉDUIT, EN PARTICULIER POUR PANNEAU ACOUSTIQUE D'AÉRONEF**

(30) Priorité: 13.08.2019 FR 1909189
(71) Demandeur: AIRBUS OPERATIONS (S.A.S.), 31060 Toulouse (FR)
(72) Inventeur: CAZEAUX, Laurent, 31060 TOULOUSE Cedex 9 (FR); MAFFRE, Claire, 31060 TOULOUSE Cedex 9 (FR); MERCAT, Florent, 31060 TOULOUSE Cedex 9 (FR)
(74) Mandataire: Gicquel, Olivier Yves Gérard

(57) **Abrégé**

- Elément acoustique à double enceinte et encombrement réduit, en particulier pour panneau acoustique d'aéronef.
- L'élément acoustique comporte une première enceinte pourvue d'une embouchure et une seconde enceinte pourvue également, à une extrémité longitudinale avant, d'une embouchure et agencée à l'intérieur de la première enceinte, ces première et seconde enceintes étant liées ensemble à l'avant. L'élément acoustique comprend un système d'assemblage (22) par emboîtement, ledit système d'assemblage (22) comprenant au moins un élément saillant (23) agencé sur le premier bord (11) de l'une desdites première et seconde enceintes et au moins un évidement (24) pratiqué dans le premier bord de l'autre desdites première et seconde enceintes, ledit élément saillant (23) et ledit évidement (24) étant de formes complémentaires de sorte que ledit élément saillant (23) puisse être emboîté dans ledit évidement (24). Ainsi les deux enceintes peuvent être assemblées par un simple et rapide emboitement.

## Description

### DOMAINE TECHNIQUE

La présente invention concerne un élément acoustique à double enceinte et encombrement réduit, et un panneau d'atténuation acoustique pour aéronef, en particulier pour un ensemble propulsif, pourvu de tels éléments acoustiques.

### ETAT DE LA TECHNIQUE

On sait que sur un aéronef, par exemple sur un avion de transport, des bruits importants sont souvent générés, notamment par les ensembles propulsifs de l'aéronef. Il est connu, pour réduire l'effet sonore produit par les ensembles propulsifs, de prévoir, en particulier au niveau des nacelles des ensembles propulsifs, des parois pourvues de panneaux présentant une bonne absorption acoustique. De façon usuelle, un panneau d'atténuation acoustique comprend généralement une plaque réalisée en un matériau et/ou une structure présentant de bonnes propriétés d'absorption acoustique, notamment pour les fréquences des bruits les plus gênants.

Cette plaque présente souvent une structure alvéolaire en nid d'abeilles et est munie sur ses deux faces, respectivement, d'une peau dite résistive souvent perforée et d'une peau arrière non perforée. Le panneau acoustique est agencé pour que la peau résistive soit située à proximité de la source de bruit, notamment en amont et/ou en aval de la soufflante (« fan » en anglais) dans le cas d'un réacteur d'aéronef, pour réaliser une absorption efficace du bruit généré en amont et aval de la soufflante.

La taille des alvéoles (section et hauteur) de la structure en nid d'abeilles est globalement adaptée à la fréquence du bruit à absorber. Or, si le bruit varie, en particulier si la fréquence du bruit à absorber baisse (de 300 Hz à 700Hz environ), en raison par exemple d'une réduction de la vitesse de rotation de la soufflante en lien avec une augmentation de son diamètre, il est nécessaire d'augmenter la hauteur des alvéoles, ce qui génère une augmentation de l'épaisseur de la structure alvéolaire. Cette augmentation de la taille de la structure en nid d'abeilles entraîne des inconvénients en termes de masse, d'encombrement et de traînée induite.

Une structure d'absorption acoustique permettant d'absorber des ondes sonores à basses fréquences est décrite dans le document « Aero-acoustic liner applications of the broadband special acoustic absorber concept, American Institute of Aeronautics and Astronautics, AIAA 2013-2176, 19th AIAA/CEAS Aeroacoustics Conférence May 27-29, 2013, Berlin, Germany ». Cette structure comprend une pluralité de capsules fermées par une peau en contact avec le milieu dans lequel se propagent les ondes sonores de sorte que chacune délimite une cavité dans laquelle est positionné un cône creux, distant de la capsule, qui présente une base débouchant au niveau de la peau. Chaque cône comprend au moins un orifice acoustique, permettant de faire communiquer l'intérieur du cône avec l'espace entre le cône et la capsule, positionné et dimensionné en fonction des caractéristiques acoustiques recherchées. En complément, la peau est poreuse au moins au droit de chaque cône. Une structure d'absorption acoustique ainsi formée, basée sur le même principe qu'un résonateur de Helmholtz et qu'un résonateur quart d'onde, permet d'atténuer les sons à basses fréquences.

Cette technologie avantageuse, basée sur une pluralité d'éléments acoustiques (à capsule et cône), présente toutefois un certain encombrement, qui peut être important pour certaines applications utilisant un nombre élevé de tels éléments acoustiques.

La présente invention traite de la façon d'assembler les cônes et capsules afin d'en simplifier l'intégration dans la structure d'absorption acoustique..

### EXPOSÉ DE L'INVENTION

La présente invention a pour objet de faciliter l'assemblage d'un élément acoustique, tout en conservant ses performances acoustiques. Pour ce faire, elle concerne un élément acoustique comprenant :
- une première enceinte pourvue d'une première embouchure entourée par un premier bord à une extrémité longitudinale dite avant ; et
- une seconde enceinte pourvue également, à une extrémité longitudinale avant, d'une première embouchure entourée par un premier bord, ladite seconde enceinte étant agencée à l'intérieur de ladite première enceinte, lesdites première et seconde enceintes étant liées ensemble à leurs premiers bords.

Selon l'invention, l'élément acoustique comprend un système d'assemblage par emboîtement, ledit système d'assemblage comprenant au moins un élément saillant agencé sur le premier bord de l'une desdites première et seconde enceintes et au moins un évidement pratiqué dans le premier bord de l'autre desdites première et seconde enceintes, ledit élément saillant et ledit évidement étant de formes complémentaires de sorte que ledit élément saillant puisse être emboîté dans ledit évidement.

Ainsi les deux enceintes peuvent être assemblées par un simple et rapide emboitement.

Dans ce mode de réalisation préféré, les deux réalisations suivantes sont possibles :
- le ou les éléments saillants sont agencés sur le premier bord de la seconde enceinte et le ou les évidements sont pratiqués dans le premier bord de la première enceinte ; ou
- le ou les éléments saillants sont agencés sur le premier bord de la première enceinte et le ou les évidements sont pratiqués dans le premier bord de la seconde enceinte.

Dans un mode de réalisation particulier, le système d'assemblage comprend une pluralité de paires d'élément saillant et d'évidement coopérant, et, pour chacune desdites paires, l'élément saillant et l'évidement sont de formes complémentaires.

En outre, dans un mode de réalisation préféré, l'élément saillant est un anneau et l'évidement est une gorge annulaire.

Par ailleurs, avantageusement, ladite seconde enceinte est pourvue d'un rebord externe audit premier bord, ledit rebord étant pourvu d'une face de contact venant au contact d'une face avant du premier bord de la première enceinte lorsque les première et seconde enceintes sont assemblées.

La présente invention concerne également un panneau acoustique pour aéronef, ledit panneau acoustique comprenant une plaque réalisée en un matériau absorbant acoustique ainsi qu'une peau dite résistive et une peau dite arrière agencées, respectivement, de part et d'autre de cette plaque.

Selon l'invention, ladite plaque est pourvue d'une pluralité de logements transversaux pratiqués dans le matériau absorbant acoustique de ladite plaque, et ledit panneau acoustique comporte une pluralité d'éléments acoustiques tels que celui décrit ci-dessus, chacun desdits éléments acoustiques étant fixé dans l'un desdits logements.

La présente invention concerne, en outre, un ensemble propulsif pour aéronef comportant au moins un élément acoustique et/ou au moins un panneau acoustique, tels que ceux décrits ci-dessus.

La présente invention concerne, également, un aéronef comportant au moins un élément acoustique et/ou au moins un panneau acoustique et/ou au moins un ensemble propulsif, tels que ceux précités.

### BRÈVE DESCRIPTION DES FIGURES

Les figures annexées feront bien comprendre comment l'invention peut être réalisée. Sur ces figures, des références identiques désignent des éléments semblables.
[Fig 1] La figure 1 est une vue schématique en coupe d'un élément acoustique monté dans un panneau acoustique.
[Fig 2] La figure 2 est une vue schématique permettant de mettre en évidence des caractéristiques géométriques d'un élément acoustique.
[Fig 3] La figure 3 est une vue schématique, en perspective, d'un premier mode de réalisation particulier d'un élément acoustique.
[Fig 4-5] La figure 4 est une vue schématique, en perspective, d'une enceinte externe de type capsule de l'élément acoustique de la figure 3. La figure 5 est une vue schématique, en perspective, d'une enceinte interne de type cône de l'élément acoustique de la figure 3.
[Fig 6] La figure 6 est une vue, en perspective, de l'élément acoustique de la figure 3 à moitié découpé longitudinalement.
[Fig 7] La figure 7 est une vue schématique, en perspective, d'un deuxième mode de réalisation particulier d'un élément acoustique.
[Fig 8] La figure 8 est une vue schématique, en perspective, d'une enceinte interne de type cône de l'élément acoustique de la figure 7.
[Fig 9] La figure 9 est une vue, en perspective, de l'élément acoustique de la figure 7 à moitié découpé longitudinalement.
[Fig 10] La figure 10 est une vue, en perspective, d'un troisième mode de réalisation particulier d'un élément acoustique à moitié découpé longitudinalement.
[Fig 11] La figure 11 est une vue schématique, en perspective, d'une enceinte interne de type cône de l'élément acoustique de la figure 10.
[Fig 12-13] La figure 12 est une vue, en perspective, d'un élément acoustique à moitié découpé longitudinalement, pourvu d'un système d'assemblage conforme à un premier mode de réalisation. La figure 13 montre, en vue agrandie, une partie de la vue de la figure 12 relative au système d'assemblage.
[Fig 14-15] La figure 14 est une vue, en perspective, d'un élément acoustique à moitié découpé longitudinalement, pourvu d'un système d'assemblage conforme à un second mode de réalisation. La figure 15 montre, en vue agrandie, une partie de la vue de la figure 14 relative au système d'assemblage.
[Fig 16] La figure 16 montre une étape d'assemblage des deux enceintes de l'élément acoustique, représentées à moitié découpé longitudinalement et en perspective.
[Fig 17] La figure 17 illustre schématiquement les étapes principales d'un procédé de fabrication d'un élément acoustique pourvu d'un système d'assemblage.
[Fig 18] La figure 18 est une vue latérale d'un aéronef, auquel peut être appliquée la présente invention.
[Fig 19] La figure 19 est une vue en perspective d'une partie d'un ensemble propulsif de l'aéronef de la figure 18, qui comporte un panneau acoustique.

### DESCRIPTION DÉTAILLÉE

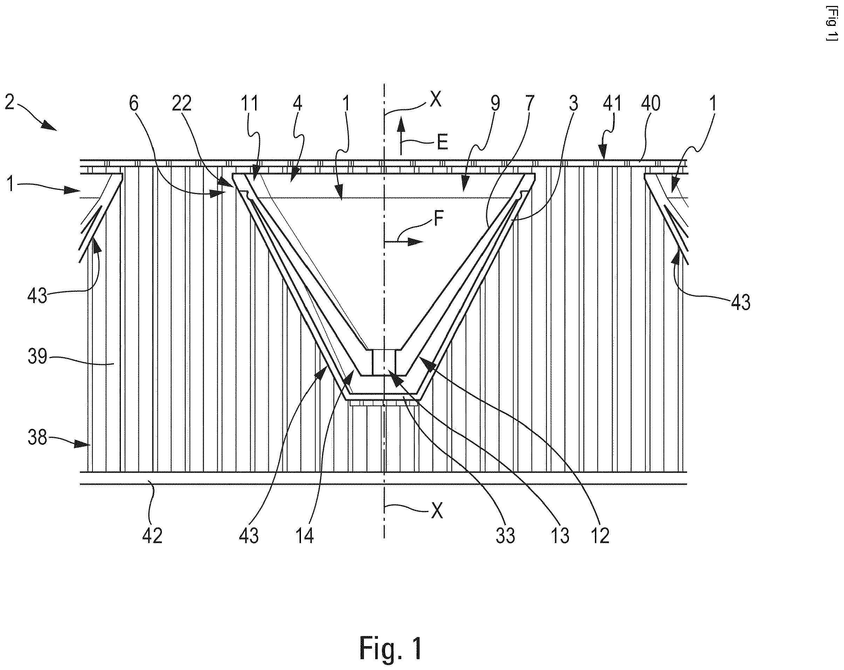

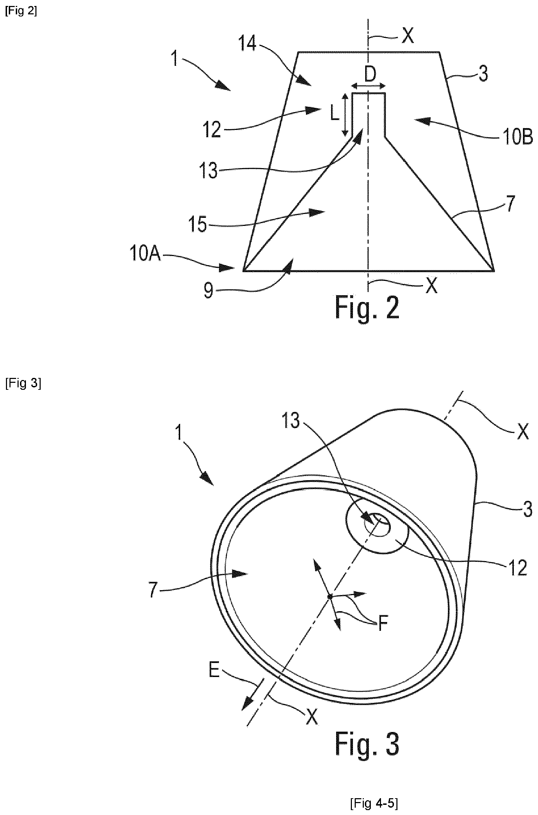

L'élément acoustique 1 représenté schématiquement dans un mode de réalisation particulier sur les figures 1 et 3 est destiné à permettre de réduire (ou atténuer) du bruit en l'absorbant, en particulier sur un aéronef.

Dans une application préférée précisée ci-dessous en référence à la figure 1, une pluralité de tels éléments acoustiques 1 sont intégrés dans un panneau acoustique 2 (ou panneau d'atténuation acoustique) destiné à permettre de réduire le bruit, par exemple sur une nacelle ou une autre partie d'un ensemble propulsif d'un aéronef.

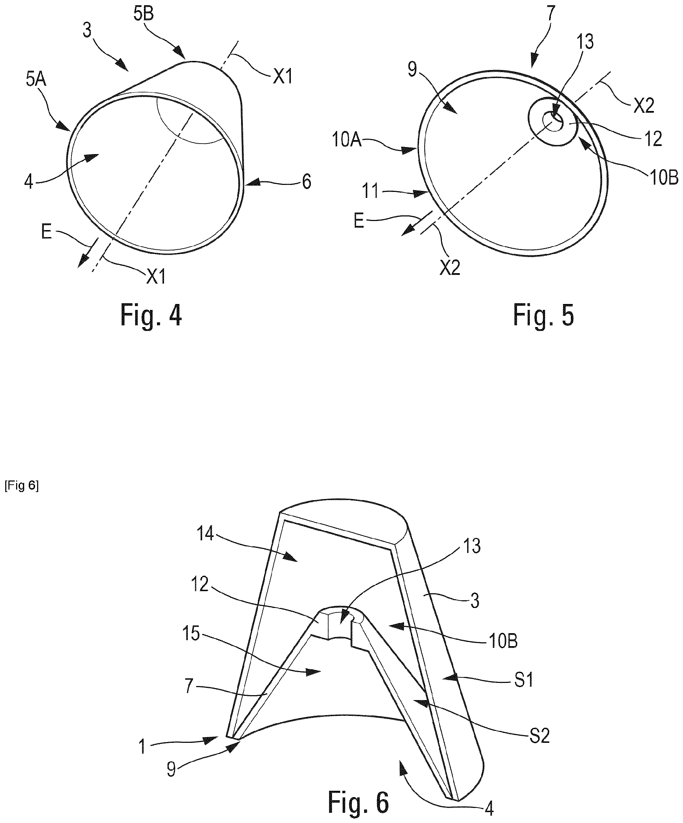

L'élément acoustique 1 comprend, comme représenté notamment sur les figures 1 à 3:
- une enceinte 3 externe allongée, dite capsule, d'axe longitudinal X1-X1 (figure 4), et de forme tronconique. Cette enceinte 3 est pourvue d'une embouchure 4 à une extrémité longitudinale 5A avant, comme représenté sur la figure 4. Cette embouchure 4 est entourée et délimitée par un bord 6 ; et
- une enceinte 7 interne allongée, dite cône, d'axe longitudinal X2-X2 (figure 5) et également de forme tronconique. Cette enceinte 7 est pourvue d'une embouchure 9 à une extrémité longitudinale 10A avant, comme représenté sur la figure 5. Cette embouchure 9 est entourée et délimitée par un bord 11.

L'enceinte 7 est agencée à l'intérieur de l'enceinte 3, comme représenté sur les figures 1 à 3, de sorte que les axes longitudinaux X1-X1 et X2-X2 sont confondus en un axe longitudinal X-X de l'élément acoustique 1, et les enceintes 3 et 7 sont liées ensemble à leurs bords 6 et 11 avant.

Sur les figures 1 et 3, on a représenté l'axe longitudinal X-X de l'élément acoustique 1. De plus, une flèche E indique un sens définissant un sens dit « avant » (dirigé selon l'axe longitudinal X-X et vers une source de bruit à traiter) par rapport à l'élément acoustique 1 et/ou aux enceintes 3 et 7. Le sens opposé à celui de la flèche E définit un sens dit « arrière » par rapport à l'élément acoustique 1 et/ou aux enceintes 3 et 7. Dans la suite de la description, les adjectifs « arrière » et « avant » sont définis par rapport au sens de la flèche E. Par ailleurs, on définit également des adjectifs « interne » et « externe » en référence à l'axe longitudinal X-X (ou aux axes longitudinaux X1-X1 et X2-X2 le cas échéant), et par rapport au sens d'une flèche F (figures 1 et 3) qui est dirigée radialement en s'écartant de l'axe longitudinal X-X. L'adjectif « externe » est défini selon le sens de la flèche F, c'est-à-dire en s'écartant de l'axe longitudinal X-X (ou X1-X1 ou X2-X2), et l'adjectif « interne » est défini selon le sens opposé à celui de la flèche F, c'est-à-dire en s'approchant de l'axe longitudinal X-X (ou X1-X1 ou X2-X2).

Selon l'invention, l'enceinte 7 comprend, à l'extrémité longitudinale 10B arrière qui est opposée à celle 10A avant pourvue de l'embouchure 9, une partie allongée 12, pourvue d'au moins une ouverture 13 qui, comme représenté sur les figures 1, 2, 3 et 6 notamment, présente une forme cylindrique (c'est-à-dire à section transversale constante longitudinalement). Cette ouverture 13 traverse la partie allongée 12 le long de l'axe longitudinal X-X.

Un espace dit intermédiaire 14 présentant un volume V est créé entre les enceintes 3 et 7, et la ou les ouvertures de la partie allongée 12 qui traversent complètement cette dernière permettent de créer une voie de communication (notamment pour le son) entre un espace interne 15 de l'enceinte 7 et l'espace intermédiaire 14, en vue de l'absorption du son dans l'espace intermédiaire 14. La partie allongée 12 présente une forme externe au moins partiellement cylindrique. La partie allongée 12 est agencée dans le prolongement de l'enceinte 7 vers l'arrière, selon l'axe X2-X2. Comme représenté sur la figure 2, la partie allongée 12 présente une longueur L suivant l'axe X-X (ou l'axe X2-X2).

La partie allongée 12 est pourvue d'une extrémité libre opposée à l'extrémité longitudinale avant 10A. Dans un mode de réalisation particulier, la partie allongée 12 présente une forme cylindrique au niveau de cette extrémité libre. Dans un autre mode de réalisation, la partie allongée 12 présente une forme entièrement cylindrique.

Cette partie allongée 12 présentant au moins une ouverture 13 cylindrique crée un effet acoustique de type résonateur de Helmholtz permettant de filtrer les basses fréquences. Plus précisément, cette partie allongée 12 débouchant sur l'espace intermédiaire 14 forme un résonateur de Helmholtz dont la partie allongée 12 représente le col et le volume intermédiaire 14 représente le volume du résonateur. Les hautes fréquences sont atténuées par le résonateur quart d'onde formé par une peau résistive 40 et la seconde enceinte 7.

La performance acoustique P de l'élément acoustique 1 dépend notamment du produit du volume V de l'espace intermédiaire 14 et de la longueur L de la partie allongée 12 (P = L.V).

Pour un élément acoustique usuel dépourvu d'un telle partie allongée 12, la longueur L est définie par l'épaisseur de la paroi arrière de l'enceinte 7, qui présente une épaisseur faible, par exemple de l'ordre de 1 mm.

Le produit L.V définit un niveau de performance donné. Par conséquent, pour conserver une performance acoustique donnée, en augmentant la longueur L (grâce à la partie allongée 12), on peut baisser le volume V de l'espace intermédiaire 14 et ainsi prévoir un volume plus réduit et donc un encombrement réduit de l'élément acoustique 1.

A titre d'illustration :
- la longueur L peut être comprise entre 2 mm et 15 mm ; et
- le diamètre D peut être compris entre 0.8 mm et 5 mm.

Dans un tel exemple, la longueur étant multipliée par un facteur compris entre 2 à 15 (en passant d'un élément acoustique usuelle d'épaisseur 1 mm à l'élément acoustique 1 pourvu d'une partie allongée 12 de longueur comprise entre 2 mm et 15 mm), une réduction du volume V de l'espace intermédiaire 14 entre les enceintes 3 et 7 d'un facteur similaire peut être envisagée pour l'élément acoustique 1 par rapport à l'élément acoustique usuel, en conservant des performances acoustiques proches. Cette réduction de l'espace intermédiaire 14 permet d'utiliser une enceinte 3 externe présentant un encombrement plus faible, l'encombrement de cette enceinte 3 définissant globalement l'encombrement de l'élément acoustique 1.

La longueur L est choisie en fonction de la fréquence sonore que l'on cherche à absorber et de contraintes d'intégration. Un volume V important de l'espace intermédiaire 14 permet d'absorber des sons présentant des fréquences basses. D'un autre point de vue, comme la performance acoustique dépend du produit L.V précité, avec un volume V constant et donc un encombrement constant, le fait de prévoir la partie allongée 12 (et donc d'augmenter la longueur L) entraîne une augmentation de la performance acoustique.

Dans un premier mode de réalisation, représenté sur les figures 3 à 6, ladite partie allongée 12 est pourvue d'une unique ouverture 13 cylindrique centrale.

Cette ouverture 13 centrale est coaxiale à l'axe X2-X2 (figure 5). Cette ouverture 13 présente un diamètre D (figure 2).

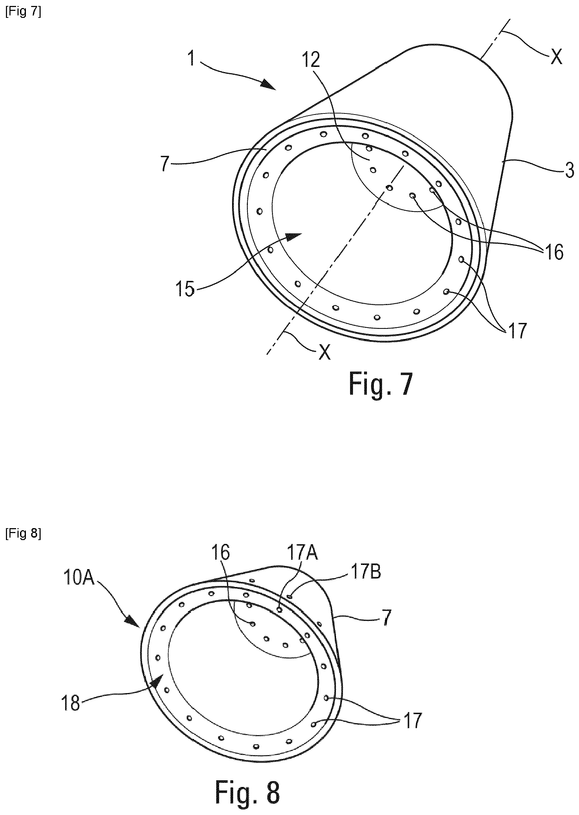

En outre, dans un deuxième mode de réalisation représenté sur les figures 7 à 9, ladite partie allongée 12 est pourvue d'une pluralité d'ouvertures 16 présentant une forme cylindrique (c'est-à-dire à section transversale constante longitudinalement), pratiquées dans ladite partie allongée 12 et réparties en étant agencées en cercle. Toute autre répartition des ouvertures 16 dans la partie allongée 12 est bien entendu envisageable. Chacune des ouvertures 16 traverse la partie allongée 12 le long d'axe parallèle à l'axe longitudinal X-X.

Pour une même longueur de partie allongée 12, une performance acoustique semblable (pour une absorption de mêmes fréquences sonores) est obtenue entre lesdits premier et deuxième modes de réalisation, si la somme des surfaces des sections transversales des ouvertures est sensiblement égale, c'est-à-dire si la somme des surfaces des sections transversales circulaires de l'ensemble des ouvertures 16 (du deuxième mode de réalisation) est sensiblement égale à la surface de la section transversale circulaire de l'ouverture 13 unique (du premier mode de réalisation).

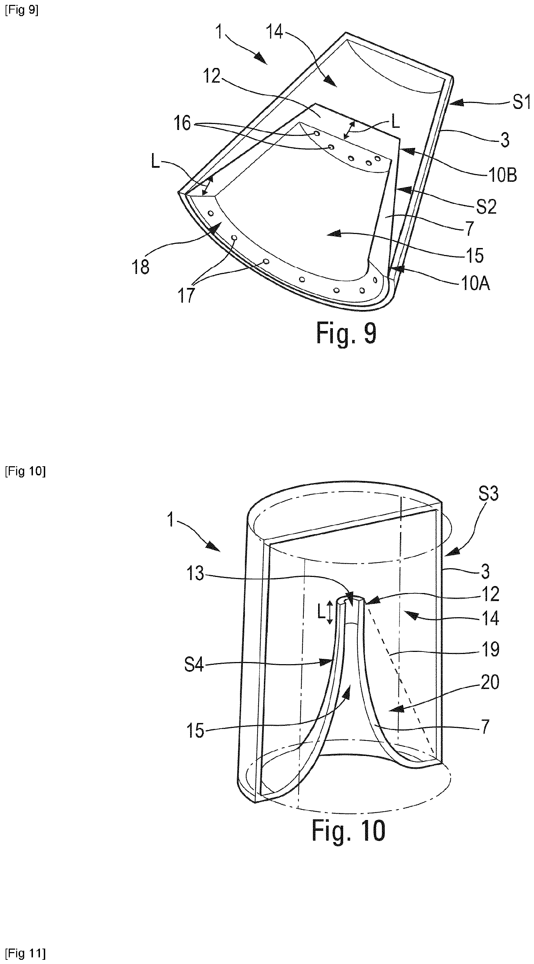

Par ailleurs, dans ce deuxième mode de réalisation, l'enceinte 7 comporte des perforations 17 cylindriques (c'est-à-dire à section transversale constante longitudinalement), pratiquées à partir d'une face avant 18 (à l'extrémité avant 10A) et traversant la paroi conique de ladite enceinte 7, comme visible sur la figure 8. Les perforations 17 cylindriques sont réparties en étant agencées en cercle. La figure 8 montre une extrémité 17A avant d'une perforation 17 quelconque et son extrémité arrière 17B correspondante. La face avant 18 est biseautée, comme visible sur la figure 9.

Bien que représentées uniquement sur ce deuxième mode de réalisation, des perforations telles que ces perforations 17 peuvent également être prévues dans les autres modes de réalisation décrits.

En plus de permettre un fonctionnement usuel de l'élément acoustique 1 à double enceinte, les ouvertures 16 et les perforations 17 permettent également de générer un effet acoustique de type résonateur de Helmholtz et de mettre en œuvre le cas échéant un drainage de liquide (et son évacuation de l'espace interne 15 vers l'espace intermédiaire 14).

Dans un mode de réalisation particulier, lesdites ouvertures 16 et lesdites perforations 17 présentent sensiblement une même longueur et un même diamètre.

Dans le cadre de la présente invention, les enceintes 3 et 7 peuvent présenter des formes variées.

Dans les premier et deuxième modes de réalisation précités, les enceintes 3 et 7 présentent, chacune, une forme tronconique S1, S2, comme montré sur les figures 6 et 9. D'autres formes sont possibles, par exemple une forme pyramidale.

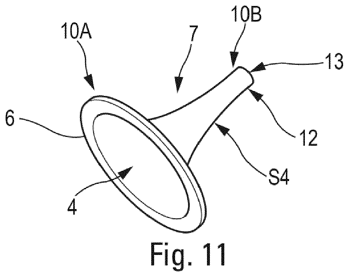

Dans un troisième mode de réalisation (représenté sur les figures 10 et 11), l'enceinte 3 présente une forme cylindrique S3 et l'enceinte 7 présente une forme évasée à paroi concave. Comme montré sur la figure 10, la forme évasée à paroi concave de l'enceinte 7 représente un entonnoir hyperbolique S4. À titre d'exemple, cette forme représente une trompette. Elle peut également représenter une forme tronconique à parois concaves, un cône se terminant en tube étroit, ...

La partie allongée 12 de longueur L est également prévue à l'extrémité arrière 10B de l'enceinte 7. Cette partie allongée 12 est pourvue d'une unique ouverture 13 cylindrique centrale. Cette ouverture 13 cylindrique centrale est coaxiale à l'axe longitudinal de la forme d'entonnoir hyperbolique S4.

Cette forme d'entonnoir hyperbolique S4 est moins étendue radialement (par rapport à l'axe longitudinal) qu'une forme tronconique, comme montré sur la figure 10 par une ligne 19 en tirets illustrant le bord d'une forme tronconique. Cette forme S4 permet de libérer un espace supplémentaire identifié par une référence 20 entre la paroi externe de l'enceinte 7 et la ligne 19, ce qui permet d'augmenter le volume de l'espace intermédiaire 14 (destiné à l'absorption acoustique) pour une même enceinte 3 externe.

Un avantage principal de ce troisième mode de réalisation est que, pour conserver un même volume de l'espace intermédiaire 14, on peut prévoir une enceinte 3 plus petite. En particulier, le diamètre de l'enceinte 3 peut être réduit. Ainsi, ce troisième mode de réalisation permet de réduire l'encombrement de l'élément acoustique 1 par rapport aux premier et deuxième modes de réalisation décrits ci-dessus.

Par ailleurs, dans un mode de réalisation préféré, l'élément acoustique 1 comporte un système d'assemblage 22 par emboîtement, qui est configuré pour lier ensemble lesdites enceintes 3 et 7 à leurs bords 6 et 11, comme montré sur les figures 1 et 12 à 15.

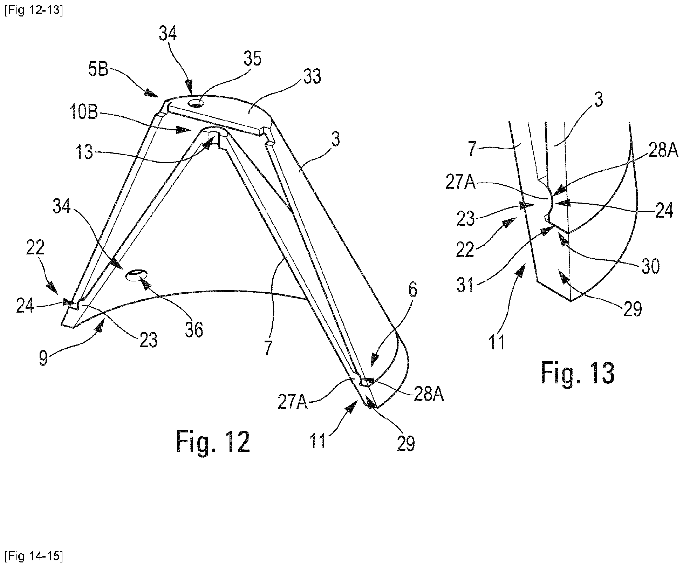

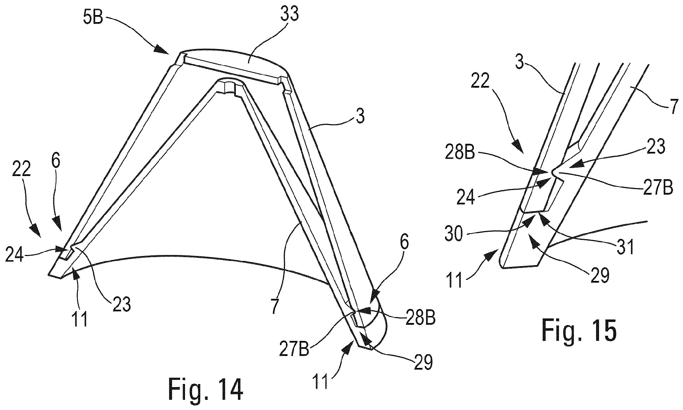

Ce système d'assemblage 22 par emboîtement peut être appliqué à chacun des modes de réalisation décrits ci-dessus. Le système d'assemblage 22 comprend au moins un élément saillant 23 agencé sur le bord avant de l'une desdites enceintes 3 et 7 et au moins un évidement 24 pratiqué dans le bord avant de l'autre desdites enceintes 3 et 7. L'élément saillant 23 et l'évidement 24 sont de formes complémentaires de sorte que l'élément saillant 23 puisse être emboîté dans l'évidement 24, dans une position assemblée (des enceintes 3 et 7) telle que représentée sur les figures 12 et 14 notamment.

Dans une réalisation préférée, le système d'assemblage 22 comprend un élément saillant 23 agencé sur une face externe du bord 11 de l'enceinte 7 et un évidement 24 pratiqué dans une face interne du bord 6 de l'enceinte 3.

En variante (non représentée), le système d'assemblage 22 peut également comprendre au moins un élément saillant agencé sur le bord 6 de l'enceinte 3 et au moins un évidement pratiqué dans le bord 11 de l'enceinte 7.

Ainsi, les deux enceintes 3 et 7 de l'élément acoustique 1 (respectivement de type capsule et cône) peuvent être assemblées ensemble par un simple emboîtement à l'aide dudit système d'assemblage 22. Cet assemblage par emboîtement peut être réalisé de façon simple et surtout rapide, comme précisé ci-dessous.

Dans une variante (non représentée), le système d'assemblage peut comprendre une pluralité de paires (dont chacune est formée d'un élément saillant et d'un évidement coopérant), et, pour chacune desdites paires, l'élément saillant et l'évidement sont de formes complémentaires. Dans ce cas, de préférence, le système d'assemblage comporte des éléments saillants sur une partie seulement de la circonférence de l'enceinte considérée, et notamment de l'enceinte 7 interne.

Dans le mode de réalisation préféré représenté sur les figures 12 à 15, l'élément saillant 23 est un anneau 27A, 27B qui entoure toute la périphérie externe de l'enceinte 7 interne à son bord 11 avant, et l'évidement 24 est une gorge annulaire 28A, 28B formé autour de toute la périphérie interne de l'enceinte 3 externe à son bord 6 avant.

Dans une première réalisation de ce mode de réalisation préféré, représentée sur les figures 12 et 13, l'anneau 27A et la gorge 28A, de formes complémentaires, présentent une section transversale en forme de demi-cercle. En outre, dans une seconde réalisation de ce mode de réalisation préféré, représentée sur les figures 14 et 15, l'anneau 27B et la gorge 28B, de formes complémentaires, présentent une section transversale triangulaire.

Bien entendu, dans le cadre de la présente invention, d'autres sections transversales sont possibles pour les formes complémentaires, de l'élément saillant 23 et de l'évidement 24.

Par ailleurs, comme représenté sur les figures 12 à 15, l'enceinte 7 est pourvue d'un rebord 29 externe audit bord 11 avant. Ce rebord 29 est pourvu d'une face de contact 30 venant au contact d'une face 31 avant du bord 6 de l'enceinte 3. En outre, l'enceinte 3 est pourvue d'un fond 33 fermé, à l'extrémité longitudinale 5B arrière, comme représenté sur les figures 12 et 14 notamment.

En outre, dans une variante de réalisation (non représentée), l'enceinte 3 peut être ouverte à l'extrémité longitudinale 5B arrière (c'est-à-dire sans fond). On peut, dans ce cas, prévoir une fermeture de cette ouverture par un fond formé par une partie de la structure dans laquelle est agencé l'élément acoustique 1, par exemple une partie du panneau acoustique 2 de la figure 1.

Par ailleurs, dans un mode de réalisation particulier, l'élément acoustique 1 comporte un système de drainage 34 (figure 12). Ce système de drainage 34 destiné à réduire un éventuel volume de fluides susceptibles de stagner dans l'élément acoustique 1 (limitant ainsi les risques d'endommagement de l'élément acoustique 1 et d'altération de son bon fonctionnement sur le plan du traitement acoustique) peut être de différents types usuels. A titre d'illustration (non limitative), le système de drainage 34 comporte au moins un trou 35 (ou perforation) pratiqué dans l'enceinte 3 et au moins un trou 36 (ou perforation) pratiqué dans l'enceinte 7, comme représenté sur la figure 12, pour évacuer le cas échéant vers l'extérieur de l'élément acoustique 1 un fluide qui a pu pénétrer dans ce dernier.

Le système de drainage 34 peut également comporter des perforations telles que les perforations 17 de la figure 8.

Dans le cadre de la présente invention, les enceintes 3 et 7 (et ainsi l'élément acoustique 1) peuvent être réalisées dans différents matériaux.

De préférence, les enceintes 3 et 7 sont réalisées :
- dans un matériau thermoplastique (injecté ou formé) ; ou
- dans un métal, tel que de l'acier inoxydable, de l'aluminium ou du titane, ou bien dans un alliage de métaux tel que de l'inconel.

L'élément acoustique 1, tel que décrit ci-dessus, présente de nombreux avantages, et en particulier :
- il peut être réalisé pour présenter un encombrement réduit pour une performance similaire par rapport à un élément acoustique usuel (dépourvu de partie allongée) ou bien pour présenter une performance accrue avec une capacité d'absorption de fréquences sonores plus basses pour un encombrement similaire par rapport à un élément acoustique usuel. On peut également combiner les deux avantages, certes dans des proportions moindres, à savoir réaliser l'élément acoustique pour qu'il présente à la fois une augmentation de la performance acoustique et une réduction de l'encombrement par rapport à un élément acoustique usuel ;
- il peut être réalisé avec tous types de matériaux ;
- il peut être réalisé avec des formes géométriques variées des enceintes (capsule et cône) ;
- il peut comporter tous les systèmes de drainage usuels ; et
- il permet de rajouter des indexages entre les enceintes.

De plus, pour le mode de réalisation (des figures 12 à 15) comprenant le système d'assemblage 22 par emboîtement, l'élément acoustique 1, présente également les avantages suivants :
- un assemblage rapide des enceintes 3 et 7 (capsule et cône), grâce audit système d'assemblage 22 par emboîtement (rapide), ce qui génère un gain de temps ;
- un assemblage simple et facile des enceintes 3 et 7 (cône et capsule), grâce audit système d'assemblage 22 par emboîtement, avec notamment la possibilité de suppression d'une opération de collage et donc de l'utilisation de colle ; et
- il peut comporter un ou des éléments saillants 23 sur une partie seulement de la circonférence de l'une des enceintes, et notamment de l'enceinte 7 interne (cône).

On décrit, ci-après, un procédé de fabrication P d'un élément acoustique 1 pourvu d'un système d'assemblage 22 par emboîtement, tel que celui représenté sur les figures 12 à 15.

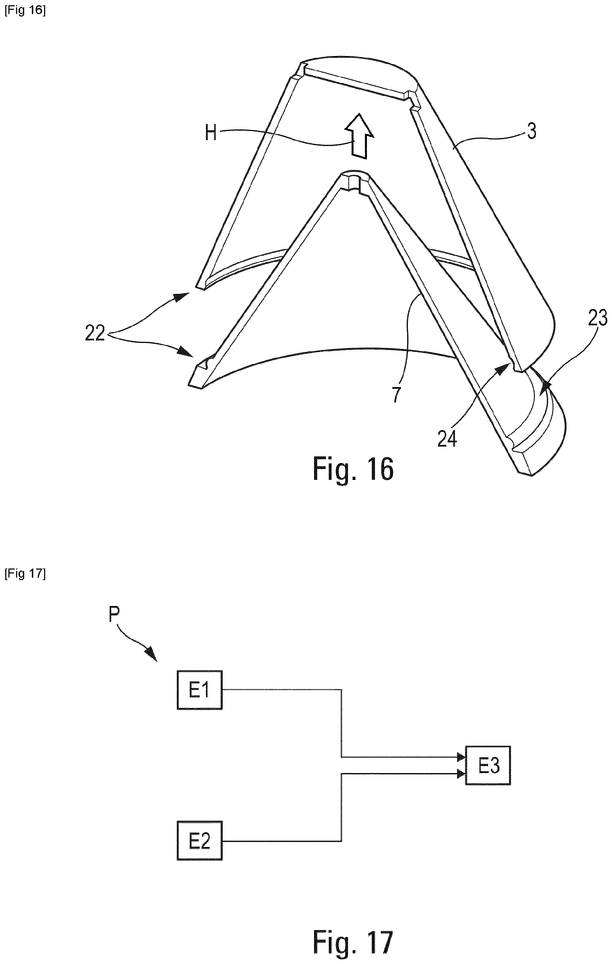

Ce procédé de fabrication P comporte une pluralité d'étapes comprenant au moins les étapes suivantes, comme illustré sur la figure 17 :
- une étape de fabrication E1 consistant à fabriquer l'enceinte 3 ;
- une étape de fabrication E2 consistant à fabriquer l'enceinte 7 ; et
- une étape d'assemblage (ou de montage) E3 consistant à introduire l'enceinte 7 (cône) dans l'enceinte 3 (capsule), comme illustré par une flèche H sur la figure 16. Cette introduction est réalisée jusqu'à assembler ensemble lesdites enceintes 3 et 7 (fabriquées aux étapes de fabrication E1 et E2), par emboîtement de l'élément saillant 23 dans l'évidement 24, de manière à obtenir l'élément acoustique 1 assemblé de la figure 12.

Les étapes de fabrication E1 et E2 peuvent être mises en œuvre successivement (quel que soit l'ordre) ou bien simultanément (c'est-à-dire en parallèle).

Les étapes de fabrication E1 et E2 peuvent être mises en œuvre de différentes manières, en particulier en fonction du matériau utilisé pour fabriquer les enceintes 3 et 7.

Lorsque les enceintes 3 et 7 sont fabriquées en matériau thermoplastique, les étapes de fabrication E1 et E2 peuvent utiliser une méthode d'injection de résine thermoplastique (chargée de fibres ou non). Les étapes de fabrication E1 et E2 peuvent également employer un thermoplastique formé.

Pour la méthode d'injection, afin de simplifier et de conserver un moule identique à celui utilisé pour les enceintes (capsule et cône) existantes, on peut tenir compte de la flexibilité de l'élément ou jouer sur la température du moule au moment de l'éjection (malléabilité de la matière).

Lorsque les enceintes 3 et 7 sont fabriquées en métal, les étapes de fabrication E1 et E2 peuvent utiliser une méthode d'emboutissage ou une méthode de roulage. Pour des enceintes 3 et 7 en métal, de nouvelles méthodes peuvent également être envisagées comme l'impulsion électromagnétique.

L'élément acoustique 1, tel que décrit ci-dessus, peut être utilisé dans de nombreuses applications.

Dans une application préférée, on agence une pluralité de tels éléments acoustiques 1 dans un panneau acoustique 2 (ou panneau d'atténuation acoustique), comme représenté schématiquement sur la figure 1.

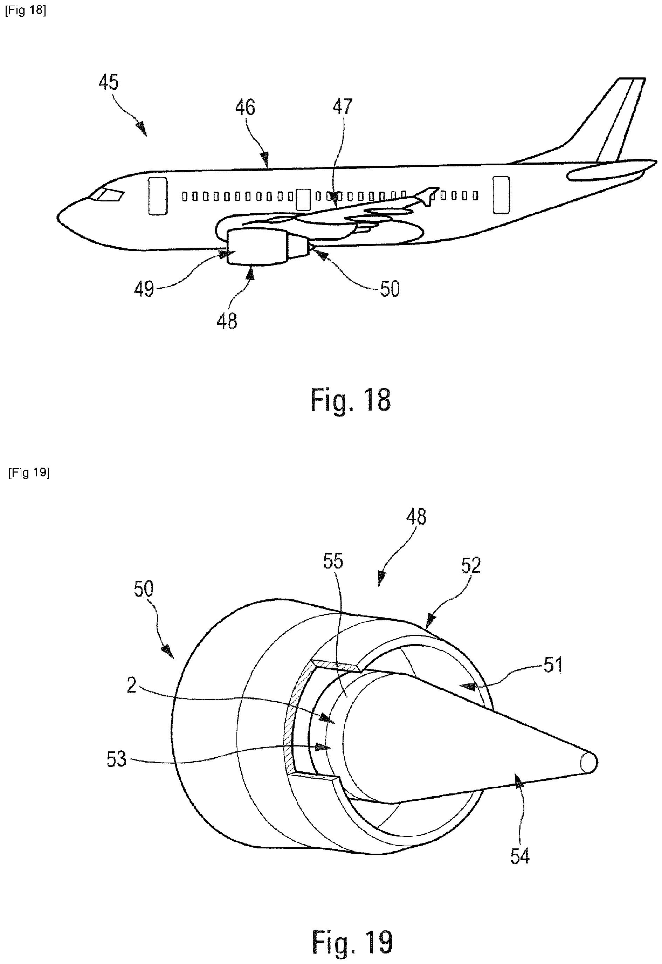

Ce panneau acoustique 2 est destiné à permettre de réduire (ou d'atténuer) du bruit en l'absorbant, sur un aéronef 45 (figure 18), en particulier sur un avion de transport.

De façon usuelle, ce panneau acoustique 2 comprend, comme représenté sur la figure 1 :
- une plaque 38 réalisée en un matériau 39 absorbant acoustique, par exemple en mousse ou en nid d'abeilles, c'est-à-dire qui est apte à absorber du bruit pour l'atténuer ;
- une peau 40 dite résistive qui est perméable au son, c'est-à-dire qui est par exemple pourvue d'une pluralité de perforations (ou trous, évidements, ajournements) 41, traversant ladite peau résistive 40 de part en part ; et
- une peau 42 dite arrière (« backing skin » en anglais), pour fermer le panneau acoustique 2 et assurer la rigidité structurale. Cette peau arrière 42 est non perforée et possède une certaine imperméabilité aux sons.

Généralement, le panneau acoustique 2 est disposé pour que la peau résistive 40 soit positionnée à proximité et de préférence proche (ou en regard) de la source de bruit à atténuer. Le bruit pénètre par les perforations 41, à travers la peau résistive 40, à l'intérieur de la plaque 38 où il est atténué.

La plaque 38 du panneau acoustique 2 est pourvue d'une pluralité de logements 43 qui sont pratiqués dans le matériau 39 absorbant acoustique de ladite plaque 38.

De plus, ledit panneau acoustique 2 comporte une pluralité d'éléments acoustiques 1 tels que ceux décrits ci-dessus, aptes à réaliser une absorption acoustique. Chacun desdits éléments acoustiques 1 est agencé dans l'un desdits logements 43 pratiqués dans la plaque 38, avec les embouchures 4 et 9 en regard de ladite peau résistive 40.

Ainsi, les éléments acoustiques 1 sont intégrés dans la plaque 38 en matériau 39 absorbant acoustique du panneau acoustique 2, ce qui permet d'absorber des bruits présentant des fréquences différentes, et en particulier des fréquences plus basses, que celles du ou des bruits absorbés par le matériau 39 de la plaque 38. La combinaison de la plaque 38 acoustique et des éléments acoustiques 1 permet ainsi d'augmenter la gamme de fréquences de bruits susceptibles d'être atténuées par le panneau acoustique 2.

Dans le cadre de la présente invention, la plaque 38 et les éléments acoustiques 1 peuvent être réalisés dans un même matériau ou dans des matériaux différents. La matière de la plaque 38 et/ou des éléments acoustiques 1 peut être, par exemple, un matériau polymère renforcé de fibres de carbone de type CFRP (pour « Carbon Fiber Reinforced Polymer » en anglais), de fibre d'aramide, de fibre de verre ou du métal tel que l'aluminium ou le titane.

On présente, ci-après, différents exemples possibles d'intégration d'éléments acoustiques 1 dans un panneau acoustique 2.

A titre d'illustration, sur un ensemble propulsif d'aéronef :
- si les éléments acoustiques 1 sont fabriqués en un matériau composite thermoplastique, ils peuvent être intégrés dans une structure en mousse ou en en nid d'abeilles, pour une application à des panneaux acoustiques de la structure externe ;
- si les éléments acoustiques 1 sont fabriqués en aluminium, ils peuvent être intégrés dans un nid d'abeilles en aluminium, pour une application à des panneaux acoustiques du carénage IFS (pour « Internai Fixed Structure ») entourant le moteur d'un turboréacteur ; et
- si les éléments acoustiques 1 sont fabriqués en un alliage de métaux (tel que de l'inconel) ou en titane, pour une application à des éléments d'échappement tels que des tuyères ou des parties de type « plug », ils peuvent être directement intégrés dans les peaux de ces éléments d'échappement ou être intégrés dans un nid d'abeilles.

Une application préférée concerne ainsi un ensemble propulsif 48 d'un aéronef 45. Sur la figure 1, on a représenté un aéronef 45 qui présente un fuselage 46, deux ailes 47 disposées de part et d'autre du fuselage 46, et des ensembles propulsifs 48 fixés sous les ailes 47. Chaque ensemble propulsif 48 comprend une nacelle 49 et une turbomachine 50 positionnée à l'intérieur de la nacelle 49. Selon un mode de réalisation représenté sur la figure 19, la turbomachine 50 comprend, à l'arrière, un conduit d'éjection primaire 51, par lequel s'échappent des gaz brûlés dans la turbomachine 50, qui est délimité à l'extérieur par une tuyère primaire 52 et à l'intérieur par une structure interne 53 prolongée par un cône de tuyère 54.

Selon une configuration, la structure interne 53 comprend un panneau acoustique 2, positionné au niveau d'une peau 55, qui délimite le conduit d'éjection primaire 51. Bien entendu, le panneau acoustique peut être positionné au niveau de toute peau qui présente une surface extérieure en contact avec un milieu dans lequel se propagent des ondes sonores, comme par exemple une lèvre et un conduit d'une entrée d'air de la nacelle 49, un carter de soufflante de la nacelle 49 ou toute autre surface de l'ensemble propulsif 48.

## Revendications

1. Elément acoustique comprenant :
- une première enceinte (3) pourvue d'une première embouchure (4) entourée par un premier bord (6) à une extrémité longitudinale dite avant (5A) ; et
- une seconde enceinte (7) pourvue également, à une extrémité longitudinale avant (10A), d'une première embouchure (9) entourée par un premier bord (11), ladite seconde enceinte (7) étant agencée à l'intérieur de ladite première enceinte (3), lesdites première et seconde enceintes (3, 7) étant liées ensemble à leurs premiers bords (6, 11),
**caractérisé en ce qu'**il comprend un système d'assemblage (22) par emboîtement, ledit système d'assemblage (22) comprenant au moins un élément saillant (23) agencé sur le premier bord (11) de l'une (7) desdites première et seconde enceintes (3, 7) et au moins un évidement (24) pratiqué dans le premier bord (6) de l'autre (3) desdites première et seconde enceintes (3, 7), ledit élément saillant (23) et ledit évidement (24) étant de formes complémentaires de sorte que ledit élément saillant (23) puisse être emboîté dans ledit évidement (24).

2. Elément acoustique selon la revendication 3,
**caractérisé en ce que** le système d'assemblage (22) comprend une pluralité de paires d'élément saillant et d'évidement coopérant, et **en ce que**, pour chacune desdites paires, l'élément saillant et l'évidement sont de formes complémentaires.

3. Elément acoustique selon la revendication 1,
**caractérisé en ce que** l'élément saillant (23) est un anneau (27A, 27B) et l'évidement (24) est une gorge (28A, 28B) annulaire.

4. Elément acoustique selon l'une quelconque des revendications 1 à 3,
**caractérisé en ce que** ladite seconde enceinte (7) est pourvue, audit premier bord (11), d'un rebord (29) externe, ledit rebord (29) étant pourvu d'une face de contact (30) venant au contact d'une face (31) avant du premier bord (6) de la première enceinte (3) lorsque les première et seconde enceintes (3, 7) sont assemblées.

5. Panneau acoustique pour aéronef, ledit panneau acoustique (2) comprenant une plaque (38) réalisée en un matériau (39) absorbant acoustique ainsi qu'une peau dite résistive (40) et une peau dite arrière (42) agencées, respectivement, de part et d'autre de cette plaque (38),
**caractérisé en ce que** ladite plaque (38) est pourvue d'une pluralité de logements (43) transversaux pratiqués dans le matériau (39) absorbant acoustique de ladite plaque (38), et **en ce que** ledit panneau acoustique (2) comporte une pluralité d'éléments acoustiques (1) selon l'une quelconque des revendications 1 à 4, chacun desdits éléments acoustiques (1) étant fixé dans l'un desdits logements (43).

6. Ensemble propulsif pour aéronef,
**caractérisé en ce qu'**il comporte au moins un panneau acoustique (2) selon la revendication 5.

7. Aéronef,
**caractérisé en ce qu'**il comporte au moins un panneau acoustique (2) selon la revendication 5.
